# EUROPÄISCHE PATENTSCHRIFT

(11) **EP 3 017 909 B1**
(45) Veröffentlichungstag und Bekanntmachung des Hinweises auf die Patenterteilung: **04.04.2018**
(21) Anmeldenummer: 15002920.5
(22) Anmeldetag: 13.10.2015
(51) Int. Cl.: B23Q 3/00, B27C 5/06, B23Q 3/06

(54) **VERSTELLEINRICHTUNG MIT EINER DRUCKROLLE EINER BEARBEITUNGSMASCHINE, INSBESONDERE KEHLMASCHINE, SOWIE BEARBEITUNGSMASCHINE, INSBESONDERE KEHLMASCHINE, MIT EINER SOLCHEN VERSTELLEINRICHTUNG**
ADJUSTING DEVICE WITH A PRINTING ROLLER OF A PROCESSING MACHINE, IN PARTICULAR A MOULDER, AND PROCESSING MACHINE, IN PARTICULAR MOULDER, WITH SUCH AN ADJUSTMENT DEVICE
DISPOSITIF DE REGLAGE AVEC UN ROULEAU PRESSEUR D'UNE MACHINE D'USINAGE, EN PARTICULIER UNE MACHINE A FRAISER ET MACHINE D'USINAGE, EN PARTICULIER MACHINE A FRAISER DOTEE D'UN TEL DISPOSITIF DE REGLAGE

(30) Priorität: 04.11.2014 DE 102014016630
(43) Veröffentlichungstag der Anmeldung: 11.05.2016
(73) Patentinhaber: Michael Weinig Ag, 97941 Tauberbischofsheim (DE)
(72) Erfinder: GRAMLICH, Rainer, 74747 Ravenstein-Oberwittstadt (DE); RAPP, Walter, 97953 Köningheim-Gissigheim (DE); WAGNER, Ralf, 74736 Hardheim (DE)
(74) Vertreter: Jackisch-Kohl, Anna-Katharina

(56) Entgegenhaltungen:
- EP-A1- 0 683 021
- EP-A2- 2 159 022
- DE-A1- 3 512 088

## Beschreibung

Die Erfindung betrifft eine Verstelleinrichtung mit einer Druckrolle einer Bearbeitungsmaschine, insbesondere einer Kehlmaschine, nach dem Oberbegriff des Anspruches 1. Eine solche Verstelleinrichtung mit einer Druckrolle ist aus DE3512088A1 bekannt. Es ist bei Bearbeitungsmaschinen, insbesondere bei Kehlmaschinen, bekannt, die Werkstücke mittels Transportwalzen durch die Bearbeitungsmaschine zu transportieren und hierbei im Durchlauf zu bearbeiten. Im Bereich der um vertikale Achsen drehenden Werkzeuge sind Druckrollen vorgesehen, die zusätzlich zu den Transportwalzen auf das zu bearbeitende Werkstück drücken. Je nach Bearbeitungsaufgabe müssen die Werkzeuge ausgewechselt werden. Hierzu ist es notwendig, die Druckrollen zu entfernen, um den Werkzeugwechsel zu ermöglichen. Bei bekannten Bearbeitungsmaschinen sind die Druckrollen fest montiert, so dass erheblicher Montageaufwand notwendig ist, wenn das im Bereich dieser Druckrollen befindliche Werkzeug gewechselt werden muss. Bei manchen Bearbeitungsaufgaben werden einzelne Druckrollen nicht benötigt oder können nicht eingesetzt werden und müssen dann ebenfalls entfernt werden.

Es ist auch bekannt, die Druckrollen an einem Schwenkarm zu lagern, mit dem die Druckrolle aus einer Druckposition, in der sie auf dem Werkstück aufliegt, in eine Ruheposition verschwenkt werden kann, wenn ein Werkzeugwechsel erforderlich ist oder diese nicht eingesetzt werden sollen. Die hierfür vorgesehene Verstelleinrichtung ist jedoch konstruktiv sehr aufwändig ausgebildet.

Weiter müssen die Druckrollen in Breitenrichtung quer zum Werkstück in Abhängigkeit von der Kehltiefe bei der rechten Spindel und der zu bearbeitenden Werkstückbreite und des Werkzeugflugkreises bei der linken Spindel eingestellt werden.

Der Erfindung liegt die Aufgabe zugrunde, die gattungsgemäße Verstelleinrichtung sowie die Bearbeitungsmaschine so auszubilden, dass die Druckrolle bei konstruktiv einfacher Ausbildung und problemloser Handhabung in eine Ruheposition und/oder quer zum Werkstück in Breitenrichtung verstellt werden kann.

Diese Aufgabe wird bei der gattungsgemäßen Verstelleinrichtung erfindungsgemäß mit den kennzeichnenden Merkmalen des Anspruches 1 und bei der Bearbeitungsmaschine erfindungsgemäß mit den Merkmalen des Anspruches 15 gelöst.

Die erfindungsgemäße Verstelleinrichtung hat die Tragstange, auf der der die Druckrolle tragende Tragarm sitzt. Die Tragstange hat zwei Abschnitte mit unterschiedlicher Querschnittsausbildung. Der erste Abschnitt der Tragstange, der einen Formschlussabschnitt bildet, hat unrunden Querschnitt. Unter einem unrunden Querschnitt wird jeder von einer Kreisform abweichende Querschnitt, wie ein eckiger, ovaler oder polygonaler Querschnitt, ein Querschnitt mit Evolventenprofil und dgl. verstanden. Der zweite Abschnitt ist ein Drehabschnitt, der an der Innenseite der Klemmöffnung anliegt und eine Drehbewegung der Tragstange um ihre Achse in der Klemmöffnung des Druckrollenhalters ermöglicht. Mit dem ersten Abschnitt lässt sich die Druckrolle zuverlässig und sicher formschlüssig in der Klemmöffnung des Druckrollenhalters klemmen. Die auf den ersten Abschnitt der Tragstange wirkende Klemmkraft wird so weit verringert, dass die Tragstange axial verschoben werden kann, um den zweiten Abschnitt in den Bereich der Klemmöffnung zu verstellen. Der zweite Abschnitt bildet den Drehabschnitt, so dass die Tragstange in der Klemmöffnung um ihre Achse gedreht werden kann. Da der Tragarm fest auf der Tragstange sitzt, wird durch die Drehbewegung der Tragstange der Tragarm geschwenkt. Dadurch lässt sich die Druckrolle sehr einfach aus der Druckposition, in der sie auf dem Werkstück aufliegt, in eine Ruheposition verstellen, wenn beispielsweise ein Werkzeugwechsel im Bereich dieser Druckrolle erforderlich ist. Die Druckrolle muss dazu nicht abgenommen und ggf. in der Ruheposition wieder neu angebracht werden.

Bei einer vorteilhaften Ausführungsform weist der zweite Abschnitt der Tragstange als Außenfläche eine zylindrische Mantelfläche auf. Die Tragstange kann dann stufenlos verdreht werden.

Bei einer vorteilhaften Ausbildung entspricht der Durchmesser der zylindrischen Mantelfläche des zweiten Abschnittes der Tragstange einem Innenkreisdurchmesser des eckigen Querschnitts des ersten Abschnittes der Tragstange. Die zylindrische Mantelfläche des zweiten Abschnittes liegt dann unter Linienberührung an ebenen Innenseiten der Klemmöffnung des Druckrollenhalters an, so dass die Tragstange um ihre Achse gedreht werden kann. Der eckige Querschnitt der Klemmöffnung entspricht hierbei vorteilhaft dem eckigen Querschnitt des ersten Abschnittes der Tragstange. Befindet sich die Tragstange darum mit dem ersten Abschnitt in der Klemmöffnung, ergibt sich eine einwandfreie Formschlussverbindung zwischen der Tragstange und dem die Klemmöffnung aufweisenden Druckrollenhalter.

Bei einer anderen vorteilhaften Ausbildung liegt die zylindrische Mantelfläche des zweiten Abschnittes der Tragstange an entsprechenden teilzylindrischen Innenseiten der Klemmöffnung des Druckrollenhalters an. In diesem Falle hat die Klemmöffnung abwechselnd teilzylindrische und ebene Innenseiten. Auch bei einer solchen Ausbildung kann der zweite Abschnitt der Tragstange in der Klemmöffnung um ihre Achse gedreht werden. Über die ebenen Innenseiten der Klemmöffnung kann der den eckigen Querschnitt aufweisende erste Abschnitt der Tragstange formschlüssig gesichert werden.

Bei einer anderen Ausführungsform weist der zweite Abschnitt der Tragstange abwechselnd ebene und gekrümmte Außenseiten auf. Die ebenen Außenseiten sind gegenüber den gekrümmten Außenseiten so weit zurückgesetzt, dass beim Drehen der Tragstange um ihre Achse nur die gekrümmten Außenseiten funktionale Flächen bilden. Sie liegen an entsprechend gekrümmten Innenseiten der Klemmöffnung an, die in einem Druckrollenhalter vorgesehen ist.

Die gekrümmten Außenseiten des zweiten Abschnittes der Tragstange und Innenseiten der Klemmöffnung liegen vorteilhaft auf einem gedachten Zylindermantel, dessen Achse die Schwenkachse des Tragarms bildet. Dadurch kann der Tragarm mit der Druckrolle durch eine einfache Drehbewegung der Tragstange in die Ruheposition verstellt werden.

Bei einer vorteilhaften Ausführungsform bilden die ebenen Außenseiten des zweiten Tragstangenabschnittes stetige Fortsetzungen der ebenen Außenseiten des ersten Tragstangenabschnittes. Dadurch ist eine einfache Fertigung der Tragstange möglich. Als Ausgangsmaterial wird eine Stange mit eckigem, vorzugsweise sechseckigem Querschnitt verwendet. Die gekrümmten Flächen lassen sich in einfacher Weise am Umfang dieses mehreckigen Querschnittes erzeugen, beispielsweise durch Drehen. Es kann auch ein viereckiger Querschnitt, ein Evolventenprofil, ein Polygonprofil und dergleichen für die Stange verwendet werden.

Die Außenseiten des zweiten Abschnittes der Tragstange sowie die Innenseiten der Klemmöffnung sind in vorteilhafter Weise so gestaltet, dass der Durchmesser des gedachten Zylindermantels, auf dem die gekrümmten Außen- bzw. Innenseiten liegen, größer ist als der Abstand zwischen einander gegenüberliegenden ebenen Außenseiten des zweiten Tragstangenabschnittes bzw. der Klemmöffnung (Schlüsselweite des Mehrkants des ersten und zweiten Abschnitts).

Vorteilhaft befindet sich der zweite Tragstangenabschnitt im Bereich zwischen dem ersten Tragstangenabschnitt und einem Endabschnitt der Tragstange.

Die beiden Tragstangenabschnitte können unterschiedlich lang sein. Der zweite Tragstangenabschnitt hat vorteilhaft eine geringfügig größere Länge als die Klemmöffnung, in welcher die Tragstange festgeklemmt wird. Der erste Tragstangenabschnitt mit dem eckigen Querschnitt ist so lang, dass der Tragarm zur Herstellung einer drehfesten Verbindung mit der Tragstange auf ihm befestigt sowie die Tragstange in der erforderlichen axialen Stellung in der Klemmöffnung geklemmt werden kann.

Der Endabschnitt der Tragstange hat bevorzugt gleichen Querschnitt wie der erste Tragstangenabschnitt. Der Endabschnitt kann als Anschlag dienen, um ein unbeabsichtigtes Herausziehen der Tragstange aus der Klemmöffnung beim Verschwenken zu verhindern.

Der erste Abschnitt und der Endabschnitt der Tragstange können winkelgleich, aber auch winkelversetzt zueinander vorgesehen sein.

Die Tragstange kann in der Klemmöffnung verschoben werden. Befindet sich die Druckrolle in ihrer Druckposition, in der sie auf dem Werkstück aufliegt, ist die Tragstange so in die Klemmöffnung geschoben, dass sich der erste Tragstangenabschnitt mit dem eckigen Querschnitt in der Klemmöffnung befindet. Die ebenen Innenseiten der Klemmöffnung liegen dann an den ebenen Außenseiten dieses ersten Tragarmabschnittes flächig an, wodurch eine einwandfreie Formschlussverbindung zwischen der Tragstange und der Wandung der Klemmöffnung hergestellt ist. Der Tragarm und damit die Druckrolle sind somit in der Druckposition einwandfrei positioniert und gehalten. Soll die Druckrolle in die Ruheposition verstellt werden, dann wird die Tragstange nach Verringern der Klemmkraft in ihrer Längsrichtung so weit verschoben, bis der zweite Tragstangenabschnitt in der Klemmöffnung liegt. Nun wirken die entsprechenden Außenseiten des zweiten Tragstangenabschnittes und die Innenseiten der Klemmöffnung funktional zusammen, so dass die Tragstange um ihre Achse gedreht und damit über den Tragarm die Druckrolle in die Ruheposition verstellt werden kann.

Die Tragstange und die Klemmöffnung des Druckrollenhalters können bei einer vorteilhaften Ausbildung auch so ausgebildet sein, dass die Tragstange mit allen ihren Abschnitten, d.h. dem ersten Abschnitt, dem zweiten Abschnitt und dem Endabschnitt, in der Klemmöffnung geklemmt werden kann.

Vorteilhaft lässt sich die Tragstange bei einer Sechskant-Ausbildung um ein Vielfaches von 60° drehen. Sobald die Tragstange um das entsprechende Maß gedreht worden ist, wird sie axial zurückgeschoben, so dass der erste Abschnitt in der Klemmöffnung liegt. Dann kann die Tragstange formschlüssig gehalten und geklemmt werden. Die Druckrolle ist dann in der Ruheposition zuverlässig gesichert. Dadurch ist eine genaue Position der Druckrolle in der Ruheposition vorgegeben, so dass eine Kollision mit anderen Bauteilen vermieden wird und ein problemloser Werkzeugwechsel möglich ist. Außerdem ist in dieser Ruheposition die Bearbeitung von Werkstücken möglich, bei der die Druckrolle nicht eingesetzt werden soll oder nicht gebraucht wird, ohne dass die Druckrolle dabei hinderlich ist. Bei der Klemmung im zweiten Abschnitt mit den abwechselnd angeordneten ebenen und gekrümmten Außenseiten wirken die zylindrischen Teilflächen zusammen, die je nach Winkellage einander mehr oder weniger überlappen. In der Winkellage der Arbeitsstellung berühren sich die Teilflächen nur über die Kanten, so dass eine Klemmung nicht möglich ist.

Eine einfache konstruktive Ausbildung ergibt sich, wenn der Druckrollenhalter wenigstens einen Klemmabschnitt aufweist, der die Klemmkraft auf die Tragstange ausübt. Dieser Klemmabschnitt ist über einen Biegebereich mit dem übrigen Teil des Druckrollenhalters verbunden.

Der Klemmabschnitt wird vorteilhaft dadurch gebildet, dass im Druckrollenhalter ein Querschlitz eingebracht wird, der sich bis in die Klemmöffnung des Druckrollenhalters erstreckt. Dieser Querschlitz trennt den Klemmabschnitt vom übrigen Teil des Druckrollenhalters. Der Querschlitz lässt sich sehr einfach in den Druckrollenhalter einbringen. Der Querschlitz wird so vorgesehen, dass er mit einem solchen Abstand von der Außenseite des Druckrollenhalters endet, dass der zwischen dieser Außenseite und dem Ende des Querschlitzes befindliche Bereich den Biegebereich des Klemmabschnittes bildet. Aufgrund der einstückigen Ausbildung des Klemmabschnittes mit dem übrigen Teil des Druckrollenhalters ergibt sich eine einfache und kostengünstige Herstellung des Druckrollenhalters.

Der Querschlitz wird so vorgesehen, dass er die Klemmöffnung durchsetzt, vorzugsweise in halber Breite. Dadurch lässt sich die Tragstange in der Klemmöffnung zuverlässig festklemmen.

Der die Laufrolle tragende Tragarm ist vorteilhaft auf der Tragstange festgeklemmt, insbesondere an ihrem ersten Abschnitt. Dadurch ist es möglich, den Tragarm einfach entfernen oder auch austauschen zu können.

Vorteilhaft ist die Laufrolle auf einem Arm gelagert, der im Tragarm festklemmbar ist. Dieser Arm erstreckt sich vorteilhaft senkrecht zum Tragarm und kann bei Bedarf einfach ausgewechselt werden.

Bei einer weiteren vorteilhaften Ausbildung ist der Druckrollenhalter in Achsrichtung der Tragstange verstellbar. Dies ist beispielsweise dann vorzusehen, wenn die Druckrolle einem Werkzeug zugeordnet ist, das in Richtung der Achse der Tragstange in Bezug auf das zu bearbeitende Werkstück verstellbar ist.

Die erfindungsgemäße Bearbeitungsmaschine bietet die Möglichkeit, mittels der Verstelleinrichtung die Druckrolle einfach aus der Druckposition in die Ruheposition zu verstellen. Vorteilhaft sind zumindest diejenigen Druckrollen verstellbar, die Werkzeugen zugeordnet sind, die um vertikale Achsen drehbar sind.

Bei einer einfachen konstruktiven Ausbildung liegt die Tragstange im Bereich oberhalb des Maschinentisches der Bearbeitungsmaschine. In diesem Falle erstreckt sich der Tragarm von der Tragstange aus schräg nach unten in Richtung auf den Maschinentisch.

Eine einfache Ausbildung ergibt sich, wenn sich die Tragstange quer zur Transportrichtung der Werkstücke durch die Bearbeitungsmaschine erstreckt. In diesem Falle liegt die Tragstange horizontal und senkrecht zur Transportrichtung der Werkstücke.

Die Bearbeitungsmaschine ist vorteilhaft mit wenigstens einem Werkzeug versehen, das mittels eines Schiebers quer zur Transportrichtung der Werkstücke durch die Maschine verstellbar ist. Ein solches Werkzeug lässt sich somit an unterschiedliche Breiten des zu bearbeitenden Werkstückes anpassen.

Damit die dem verstellbaren Werkzeug zugeordnete Druckrolle bei der Verstellung ihre Position in Bezug auf das Werkzeug beibehält, ist bei einer erfindungsgemäßen Ausbildung der Bearbeitungsmaschine der Schieber mit einem Druckrollenhalter vorteilhaft so gekoppelt, dass der Druckrollenhalter zusammen mit dem Schieber quer zur Transportrichtung der Werkstücke verstellt werden kann. Eine Verstellung des Schiebers sowie des darauf sitzenden Werkzeuges führt damit zwangsläufig zu einer entsprechenden Verstellung des Druckrollenhalters und damit der zugeordneten Druckrolle. Eine solche Ausbildung einer Bearbeitungsmaschine ist unabhängig von der sonstigen Gestaltung, insbesondere der Tragstange.

Bei einer besonders vorteilhaften Ausführungsform ist die Verstellbewegung des Druckrollenhalters von der Verstellbewegung des Schiebers abgeleitet.

Hierbei ist vorteilhaft, wenn der Schieber und der Druckrollenhalter über wenigstens eine Fernbetätigung miteinander verbunden sind. Wird der Schieber und damit das Werkzeug quer zur Transportrichtung der Werkstücke verstellt, wird über die Fernbetätigung auch der Druckrollenhalter mitgenommen, so dass der Abstand zwischen der Laufrolle und dem verstellbaren Werkzeug bei der Verstellung beibehalten wird. Eine gesonderte Verstelleinheit für den Druckrollenhalter ist somit nicht notwendig. Die Fernbetätigung ermöglicht eine besonders kostengünstige Ausbildung der Verstellung, die zudem zuverlässig arbeitet.

Der Anmeldungsgegenstand ergibt sich nicht nur aus dem Gegenstand der einzelnen Patentansprüche, sondern auch durch alle in den Zeichnungen und der Beschreibung offenbarten Angaben und Merkmale. Sie werden, auch wenn sie nicht Gegenstand der Ansprüche sind, als erfindungswesentlich beansprucht, soweit sie einzeln oder in Kombination gegenüber dem Stand der Technik neu sind.

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigen
- Fig. 1: in perspektivischer Darstellung eine erfindungsgemäße Bearbeitungsmaschine mit erfindungsgemäßen Verstelleinrichtungen für Druckrollen,
- Fig. 2: eine Vorderansicht der Bearbeitungsmaschine gemäß Fig. 1, bei der die Druckrollen sich in einer Druckposition befinden,
- Fig. 3: in einer Darstellung entsprechend Fig. 2 die Bearbeitungsmaschine mit weggeschwenkten Druckrollen,
- Fig. 4: die vor der rechten Spindel der Bearbeitungsmaschine befindliche Druckrolle in Druckposition mit der zugehörigen Verstelleinrichtung,
- Fig. 5: die Verstelleinrichtung gemäß Fig. 4 in perspektivischer Darstellung,
- Fig. 6: die Druckrolle gemäß Fig. 4 in weggeschwenkter Lage,
- Fig. 7: die Druckrolle mit Verstelleinrichtung gemäß Fig. 6 in perspektivischer Darstellung,
- Fig. 8: die Druckrolle gemäß Fig. 4 in einer Position, in der sie aus der Druckposition weggeschwenkt werden kann,
- Fig. 9: in perspektivischer Darstellung eine Tragstange der Verstelleinrichtung für die Druckrolle,
- Fig. 10: eine Seitenansicht der Tragstange gemäß Fig. 9,
- Fig. 11: einen Schnitt längs der Linie A-A in Fig. 10,
- Fig. 12: in Vorderansicht einen Druckrollenhalter,
- Fig. 13: den Druckrollenhalter gemäß Fig. 12 in perspektivischer Darstellung,
- Fig. 14: die Ausbildung der Innenkontur der Klemmaufnahme des Druckrollenhalters gemäß Fig. 12,
- Fig. 15: in perspektivischer Darstellung einen Teil der Bearbeitungsmaschine mit einer mittels einer Fernbetätigung verstellbaren Druckrolle,
- Fig. 16: den Teil der Bearbeitungsmaschine gemäß Fig. 15 in Seitenansicht,
- Fig. 17: in vergrößerter Darstellung und teilweise geschnitten einen Teil der Bearbeitungsmaschine gemäß Fig. 16,
- Fig. 18: in vergrößerter Darstellung die Befestigung der Fernbetätigung an einem Spindelschieber,
- Fig. 19: in perspektivischer Darstellung eine weitere Ausführungsform einer Tragstange,
- Fig. 20 bis Fig. 24: in vergrößerter Darstellung und im Schnitt unterschiedliche Winkellagen der Tragstange in der Klemmöffnung des Druckrollenhalters,
- Fig. 25: in perspektivischer Darstellung ein weiteres Ausführungsbeispiel einer Tragstange.

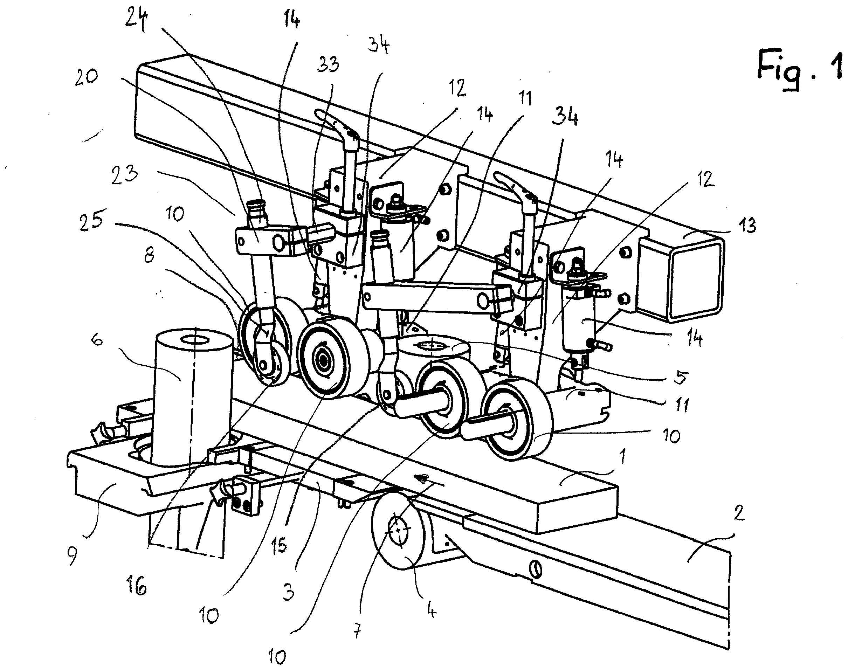

Die Bearbeitungsmaschine ist vorteilhaft eine Kehlmaschine. Sie dient zur Bearbeitung von Werkstücken 1 aus Holz, die über einen Einlauftisch 2 zugeführt und in der Kehlmaschine auf einem Maschinentisch 3 während der Bearbeitung transportiert werden. Die Werkstücke 1 werden in der Kehlmaschine an allen vier Seiten beim Durchlauf durch die Kehlmaschine bearbeitet. In Fig. 1, die nur einen Teil der Kehlmaschine zeigt, sind ein unteres Werkzeug 4, das um eine horizontale Achse drehbar ist, ein rechtes Werkzeug 5 und ein linkes Werkzeug 6 schematisch dargestellt. Die beiden Werkzeuge 5, 6 sind um vertikale Achsen drehbar. Mit dem unteren Werkzeug 4 wird die Unterseite des Werkstückes 1, mit dem rechten Werkzeug 5 die in Transportrichtung rechte Längsseite und mit dem Werkzeug 6 die in Transportrichtung 7 linke Längsseite des Werkstückes 1 bearbeitet. Die beiden vertikalen Werkzeuge 5, 6 liegen in Transportrichtung des Werkstückes 1 versetzt zueinander. In Transportrichtung des Werkstückes 1 hinter dem linken Werkzeug 6 hat die Kehlmaschine noch ein oberes (nicht dargestelltes) Werkzeug, das um eine horizontale Achse drehbar ist und mit dem die Oberseite des Werkstückes 1 bei dessen Durchlauf durch die Kehlmaschine bearbeitet wird. In Transportrichtung 7 des Werkstückes 1 hinter dem oberen Werkzeug kann noch ein weiteres unteres Werkzeug vorgesehen sein, mit dem die Unterseite des Werkstückes 1 nochmals beim Durchlauf bearbeitet wird. Während des Durchlaufes durch die Kehlmaschine liegt das Werkstück 1 mit seiner in Transportrichtung 7 rechten Längsseite an Anschlägen 8 an.

Das linke Werkzeug 6 ist an einem Spindelschieber 9 gelagert, der quer zur Transportrichtung 7 verschiebbar am Maschinentisch 3 angeordnet ist. Mit dem Schieber 9 kann das Werkzeug 6 auf unterschiedliche Breiten der Werkstücke 1 eingestellt werden.

Zum Transport des Werkstückes 1 durch die Kehlmaschine sind Vorschubwalzen 10 vorgesehen, die auf der Oberseite des Werkstückes 1 aufliegen und es in Transportrichtung 7 durch die Kehlmaschine transportieren. Jeweils zwei Vorschubwalzen 10 sind an Vorschubpendeln 11 angeordnet, die schwenkbar an einem Pendelhalter 12 gelagert sind. Die Pendelhalter 12 sind an einem Transportbalken 13 befestigt, der sich in Transportrichtung 7 mit Abstand oberhalb des Maschinentisches 3 erstreckt. Die Pendelhalter 12 sind lösbar am Transportbalken 13 befestigt. Je nach Länge der Kehlmaschine sind am Transportbalken 13 mehr als zwei Pendelhalter 12 befestigt, die jeweils Vorschubpendel 11 mit Transportwalzen 10 tragen. Mit Hilfe von Druckzylindern 14, vorzugsweise Pneumatikzylindern, werden die Vorschubwalzen 10 gegen die Oberseite des Werkstückes 1 gedrückt. Die Druckzylinder 14 sind an den Pendelhaltern 12 gelagert und greifen an den Vorschubpendeln 11 an.

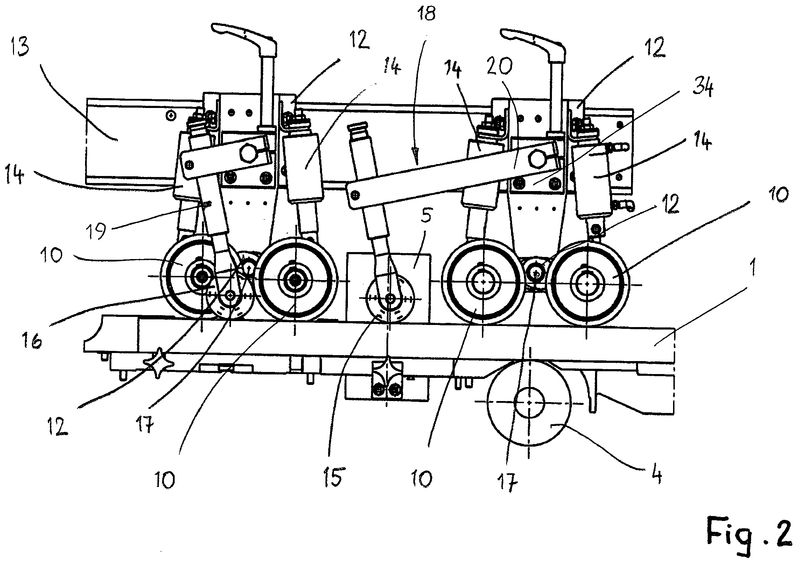

Die Vorschubpendel 11 sind einarmige Hebel, deren eines Ende auf einer gemeinsamen horizontalen Achse 17 schwenkbar gelagert ist (Fig. 2). Die Druckzylinder 14 greifen an den freien Enden der Vorschubpendel 11 an.

Etwa in Höhe der beiden Werkzeuge 5, 6 ist jeweils eine Druckrolle 15, 16 vorgesehen, die unter Druck auf dem Werkstück 1 aufliegt und dieses gegen den Maschinentisch 3 belastet. Die Druckrollen 15, 16 sind um ihre horizontalen Achsen frei drehbar und können aus der in Fig. 1 dargestellten Druckposition in eine Ruheposition verstellt werden, wenn ein Werkzeugwechsel vorgenommen werden soll oder wenn die Druckrollen nicht benötigt werden.

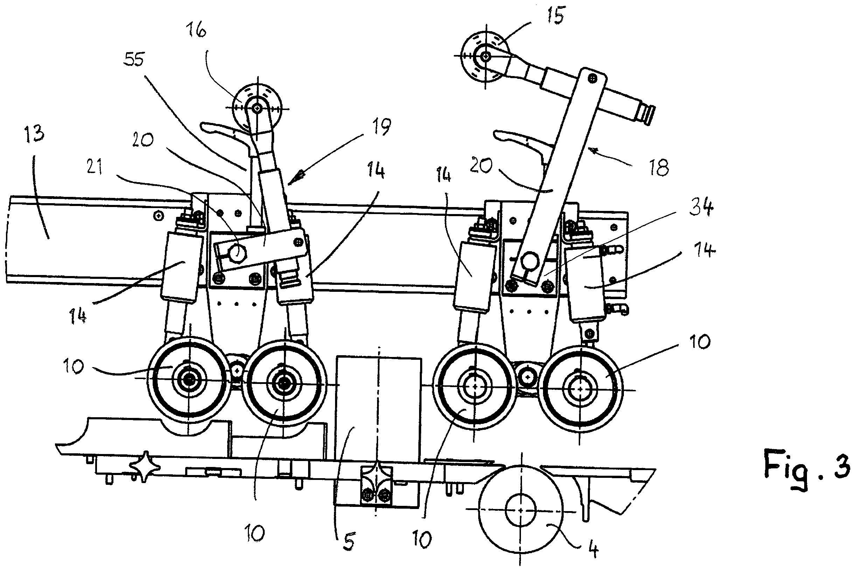

Die Druckrollen 15, 16 sind vorteilhaft gefedert abgestützt, so dass sie beim Durchlauf der Werkstücke 1 durch die Kehlmaschine Unebenheiten an der Oberseite der Werkstücke 1 folgen können, so dass das Werkstück 1 mit ausreichender Kraft angedrückt bzw. gehalten wird, ohne dass das Werkstück 1 verklemmt und/oder beschädigt wird. Die Druckrollen 15, 16 können mit Hilfe einer Verstelleinheit 18, 19 aus der Druckposition (Fig. 1 und 2) in eine Ruheposition (Fig. 3) verschwenkt werden.

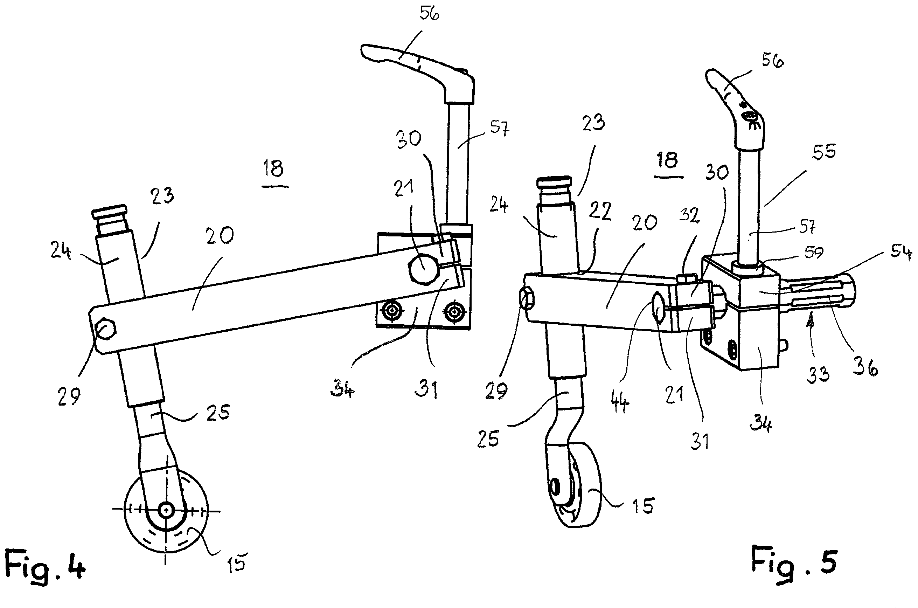

Die Verstelleinheit 18 (Fig. 4 und 5) hat einen Tragarm 20, der um eine horizontale Achse 21 schwenkbar ist. Der Tragarm 20 ist an seinem der Schwenkachse 21 gegenüberliegenden freien Ende mit einer Durchgangsöffnung 22 versehen, durch welche ein Arm 23 ragt. Er hat ein Gehäuse 24, in dem sich ein Druckmedium befindet, mit dem die Druckrolle 15 in Richtung auf das Werkstück 1 belastet wird. Das Druckmedium im Gehäuse 24 ist vorteilhaft wenigstens eine Druckfeder, kann aber beispielsweise auch ein Pneumatikmedium sein. Aus dem Gehäuse 24 ragt eine Achse 25, die durch das Druckmedium belastet ist und am freien Ende die Druckrolle 15 trägt, die um die horizontale Achse 26 frei drehbar ist.

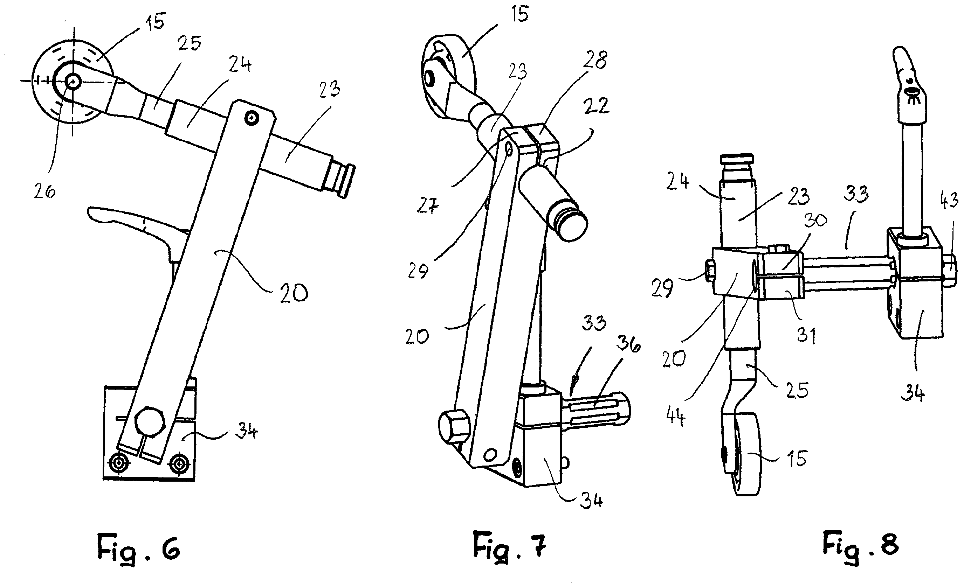

Die Durchgangsöffnung 22 befindet sich zwischen zwei Klemmabschnitten 27, 28 (Fig. 7), die am freien Ende des Tragarms 20 vorgesehen und einstückig mit ihm ausgebildet sind. Die beiden Klemmabschnitte 27, 28 haben Abstand voneinander und sind durch eine sie durchsetzende Klemmschraube 29 miteinander verbunden. Der Arm 23 wird durch die Durchgangsöffnung 22 gesteckt und anschließend durch Anziehen der Klemmschraube 29 zwischen den beiden Klemmabschnitten 27, 28 eingeklemmt. Die Klemmabschnitte 27, 28 sind so ausgebildet, dass der Rand der Durchgangsöffnung 22 den Arm 23 nahezu über den gesamten Umfang umgibt. Dadurch wird der Arm 23 sicher am Tragarm 20 gehalten. Die Klemmabschnitte 27, 28 umgreifen das Gehäuse 24 des Armes 23, so dass die Achse 25 bei Bedarf die notwendigen Ausgleichsbewegungen beim Durchlauf der Werkstücke 1 ausführen kann.

Der Tragarm 20, der als einarmiger Hebel ausgebildet ist, ist im Bereich seiner Schwenkachse 21 mit weiteren zwei Klemmabschnitten 30, 31 versehen, die einstückig mit dem Tragarm 20 ausgebildet und durch eine Klemmschraube 32 miteinander verbunden sind. Die Klemmabschnitte 30, 31 liegen mit geringem Abstand einander gegenüber. Die Klemmabschnitte 30, 31 sowie die Klemmschraube 32 liegen senkrecht zu den am anderen Ende des Tragarms 20 vorgesehenen Klemmabschnitten 27, 28 und der Klemmschraube 29. Die Klemmabschnitte 30, 31 umgreifen eine Tragstange 33, die in einem Druckrollenhalter 34 gehalten ist. Er ist an der Vorderseite des Pendelhalters 12 befestigt.

Die Tragstange 33 hat einen mehreckigen Schaft 35, der sich über einen Teil der Länge der Tragstange 33 erstreckt. Im Ausführungsbeispiel beträgt die Länge des Schaftes 35 mehr als die halbe Länge der Tragstange 33. Der Schaft 35 hat beispielhaft sechseckigen Querschnitt.

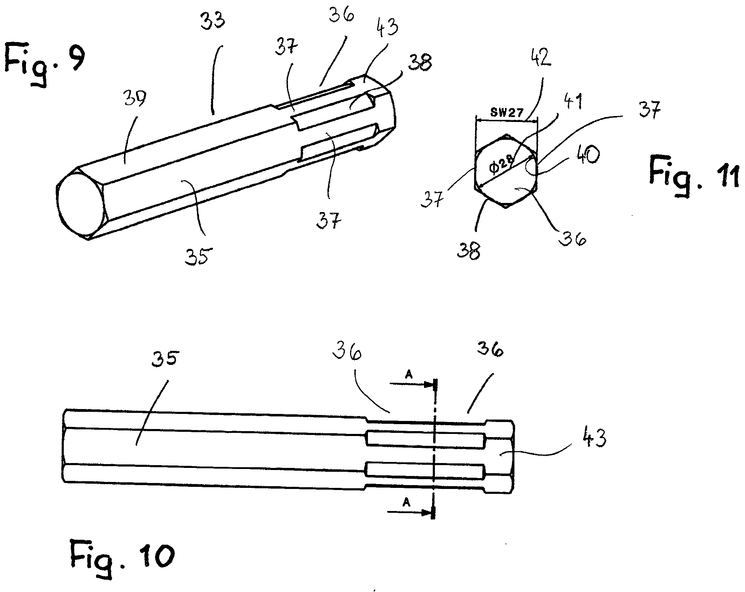

An den Schaft 35 schließt axial ein Drehabschnitt 36 an, der einstückig mit dem Schaft 35 ausgebildet ist. Der Drehabschnitt 36 weist über seinen Umfang abwechselnd ebene Flächen 37 und gekrümmte Flächen 38 auf. Die ebenen Flächen 37 bilden eine Fortsetzung der entsprechenden ebenen Flächen 39 des Schafts 35. Die ebenen Flächen 37 liegen, in Achsrichtung der Tragstange 33 gesehen, mittig zu den ebenen Flächen 39 des Schaftes 35, haben jedoch geringere Breite als die Flächen 39. Die zwischen den ebenen Flächen 37 vorgesehenen gekrümmten Flächen 38 liegen auf einem gedachten Zylinder 40 (Fig. 11), dessen Durchmesser 41 geringfügig größer ist als der Abstand 42 zwischen den diametral einander gegenüberliegenden ebenen Flächen 37. Im beispielhaften Fall beträgt der Abstand 42 27 mm, während der Durchmesser 41 28mm beträgt. Dadurch bilden die gekrümmten Flächen 38 des Drehabschnittes 36 die funktionalen Flächen, die es ermöglichen, dass die Tragstange 33 um ihre Achse gedreht werden kann.

Am freien Ende 43 hat die Tragstange 33 wieder den gleichen mehreckigen Umriss wie der Schaft 35. Dieses freie Ende 43 hat nur eine geringe Länge.

Die Tragstange 33 liegt mit ihrem Schaft 35 zwischen den Klemmabschnitten 30, 31 des Tragarms 20. Die Klemmabschnitte 30, 31 begrenzen eine Durchgangsöffnung 44 (Fig. 5 und 8), die entsprechend dem Schaft 35 der Tragstange 33 mehreckigen Umriss hat. Dadurch ist der Tragarm 20 zuverlässig formschlüssig mit der Tragstange 33 verbunden. Mit der Klemmschraube 32, die im Bereich neben der Durchgangsöffnung 44 vorgesehen ist, lassen sich die beiden Klemmabschnitte 30, 31 fest auf dem Schaft 35 der Tragstange 33 festklemmen.

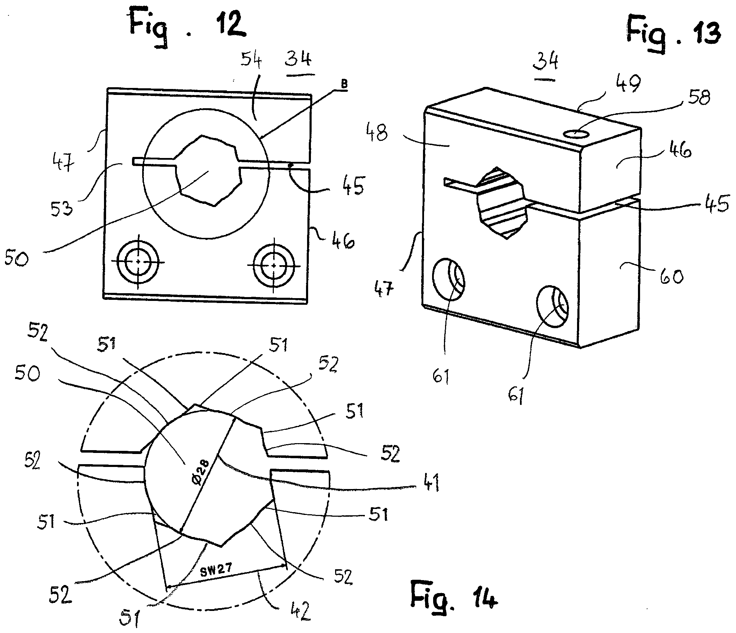

Der Druckrollenhalter 34 hat etwa quaderförmige Ausbildung (Fig. 12 und 13) und weist einen Querschlitz 45 auf, der sich von einer Schmalseite 46 des Druckrollenhalters 34 aus senkrecht bis nahe an die gegenüberliegende Schmalseite 47 erstreckt. Der Querschlitz 45 erstreckt sich auch bis in die einander gegenüberliegenden, senkrecht zu den Schmalseiten 46, 47 liegenden Seitenflächen 48, 49 des Druckrollenhalters 34. Im Ausführungsbeispiel liegt der Querschlitz 45 im Druckrollenhalter 34 außermittig.

Der Querschlitz 45 durchsetzt etwa mittig eine Öffnung 50, die sich zwischen den einander gegenüberliegenden, zueinander parallelen Seitenflächen 48, 49 erstreckt. Der Umriss der Öffnung 50 setzt sich wie der Umriss des Drehabschnittes 36 der Tragstange 33 aus gekrümmten (teilzylindrischen) und ebenen Flächen zusammen.

Wie aus Fig. 14 hervorgeht, hat die Öffnung 50 ebene Seitenflächen 51, die sich über die Länge der Öffnung 50 erstrecken und in halber Breite jeweils eine gekrümmte Fläche 52 aufweisen. Diese gekrümmten Flächen 52 liegen auf einem gedachten Zylinder mit dem Durchmesser 41. Die ebenen Seitenflächen 51 sind so angeordnet, dass diametral einander gegenüberliegende Seitenflächen 51 den Abstand 42 voneinander haben. Wie anhand des Drehabschnittes 36 der Tragstange 33 beschrieben, ist der Durchmesser 41 geringfügig größer als der Abstand 42 der diametral gegenüberliegenden ebenen Seitenflächen 51. Beispielhaft ist in Fig. 14 angegeben, dass der Durchmesser 41 28mm und der Abstand 42 27mm beträgt. Wenn sich darum der Drehabschnitt 36 in der Öffnung 50 des Druckrollenhalters 34 befindet, sind lediglich die gekrümmten Flächen 52 wirksam, an denen die gekrümmten Flächen 38 des Drehabschnittes 36 der Tragstange 33 anliegen. Dann lässt sich die Tragstange 33 um ihre Achse drehen. Diese Achse bildet die Schwenkachse 21 (Fig. 5), um welche der Tragarm 20 geschwenkt wird, um die Druckrolle 15 aus der Druckposition in die Ruheposition zu verstellen.

Eine solche Öffnung 50 lässt sich einfach herstellen, indem zunächst die zylindrische Bohrung hergestellt wird und danach der Sechskant geräumt wird.

Der Querschlitz 45 ragt so weit in Richtung auf die Schmalseite 47 des Druckrollenhalters 34, dass sich ein Biegebereich 53 zwischen dem Ende des Querschlitzes 45 und der Schmalseite 47 ergibt. Dadurch kann der in der Einbaulage obere Abschnitt 54 mittels einer Klemmeinrichtung 55 (Fig. 5) elastisch so gebogen werden, dass der Schaft 35 oder der Drehabschnitt 36 in der Öffnung 50 festgespannt wird. Die Klemmeinrichtung 55 hat einen Klemmhebel 56, mit dem eine Klemmspindel 57 betätigt werden kann. Die Klemmspindel 57 durchsetzt den Klemmabschnitt 54, der mit einer entsprechenden Durchtrittsöffnung 58 (Fig. 13) versehen ist. Die Klemmspindel 57 ist mit einem Bund 59 versehen, der auf dem Klemmabschnitt 54 aufliegt. Die Klemmspindel 57 durchquert im Bereich neben der Öffnung 50 den Querschlitz 45 und ist in den unterhalb des Klemmabschnittes 54 liegenden Teil 60 des Druckrollenhalters 34 geschraubt.

Befindet sich die Druckrolle 15 in ihrer Druckposition, wie sie in den Fig. 1, 2, 4 und 5 dargestellt ist, ist die Tragstange 33 so weit in den Druckrollenhalter 34 geschoben, dass der Schaft 35 in der Öffnung 50 liegt. Mit der Klemmeinrichtung 55 wird der Klemmabschnitt 54 fest gegen den Schaft 35 gespannt. Da der Schaft 35 nur die ebenen Flächen 39 aufweist, wirken diese mit den Seitenflächen 51 der Öffnung 50 zusammen. Dadurch wird ein zuverlässiger Formschluss erreicht, so dass der Tragarm 20 nicht um die Achse 21 geschwenkt werden kann. Der Schaft 35 ragt auch in die eckige Durchgangsöffnung 44 des Tragarms 20, der mit Hilfe der Klemmschraube 32 auf dem Schaft 35 festgeklemmt ist.

Mit dem Arm 23 kann die Laufrolle 15 senkrecht zum Tragarm 20 stufenlos eingestellt werden. Der Arm 23 wird zwischen den beiden Klemmabschnitten 27, 28 mit Hilfe der Klemmschraube 29 fest eingespannt.

Soll die Druckrolle 15 in ihre Ruheposition, wie sie in den Fig. 3 und 6 dargestellt ist, verstellt werden, wird zunächst mittels der Klemmeinrichtung 55 die Klemmung der Tragstange 33 im Druckrollenhalter 34 gelöst. Dann kann die Tragstange 33 in ihrer Längsrichtung aus dem Druckrollenhalter 34 so weit herausgezogen werden, dass der Drehabschnitt 36 der Tragstange 33 in der Öffnung 50 des Druckrollenhalters 34 liegt. Da die gekrümmten Flächen 52 der Öffnung 50 auf einer Zylinderfläche liegen, deren Durchmesser 41 geringfügig größer ist als der Abstand 42 der diametral einander gegenüberliegenden ebenen Seitenflächen 51, lässt sich die Tragstange 33 in der Öffnung 50 um ihre Achse drehen, da in diesem Falle nur die gekrümmten Flächen 38, 52 Funktionsflächen sind. Somit kann der Tragarm 20 um die Schwenkachse 21 aufwärts in die Ruheposition geschwenkt werden, in der sich die Druckrolle 15 im Bereich oberhalb des Transportbalkens 13 befindet (Fig. 3). Damit der Tragarm 20 nicht wieder in Richtung auf seine Druckposition zurückschwenkt, wird mit der Klemmeinrichtung 55 der Klemmabschnitt 54 des Druckrollenhalters 34 gegen den Drehabschnitt 36 geklemmt.

Es ist auch möglich, dass die Tragstange 33 nach dem Verdrehen wieder zurückgeschoben wird, so dass der Schaft 35 im Druckrollenhalter 34 liegt. Dann kann die Tragstange 33 durch Formschluss sicher gegen Drehen geklemmt werden, so dass der Tragarm 20 nicht aus der Ruheposition in die Druckposition zurückgeschwenkt werden kann. Bei einer Sechskant-Ausbildung kann die Tragstange 33 und damit der Tragarm 20 definierte Winkellagen (60°, 120°, 180° ...) in der geklemmten Ruhestellung zu der Stellung in der Druckposition einnehmen.

Das freie Ende 43 der Tragstange 33, das gleichen Querschnitt wie der Schaft 35 hat, verhindert, dass beim Schwenken die Tragstange 33 aus dem Druckrollenhalter 34 herausgezogen werden kann. In der Winkelposition, wenn die Sechskante von Klemmöffnung 50 und freiem Ende 43 fluchten, ist dies und damit ein Entfernen der Druckrolle möglich. Die Verhinderung des Herausziehens ist bei einer nicht dargestellten Ausbildung auch dadurch möglich, dass, nachdem die Tragstange 33 durch die Klemmöffnung 50 gesteckt wurde, stirnseitig an dem freien Ende 43 eine Scheibe mit größerem Durchmesser als der Sechskant montiert wird, was jedoch aufwändiger ist.

In unteren Teil 60 des Druckrollenhalters 34 befinden sich zwei Durchtrittsöffnungen 61, die in die einander gegenüberliegenden Seitenflächen 48, 49 des Druckrollenhalters 34 münden und durch welche Schrauben ragen, mit denen der Druckrollenhalter 34 am Pendelhalter 12 befestigt werden kann.

Die Druckrolle 15 befindet sich in Höhe des rechten Werkzeuges 5. Wie aus Fig. 1 hervorgeht, befindet sich die Druckrolle 15 zwischen zwei Vorschubwalzen 10. Im Ausführungsbeispiel liegt die Druckrolle 15 zwischen zwei Walzenpaaren. Darum ist der Tragarm 20 verhältnismäßig lang, da er am Druckrollenhalter 34 schwenkbar gelagert ist, der am Pendelhalter 12 befestigt ist.

Die andere Druckrolle 16 befindet sich in Höhe des linken Werkzeuges 6 sowie im Bereich neben den Vorschubwalzen 10. Auch diese Druckrolle 16 ist in gleicher Weise am Druckrollenhalter 34 gehalten wie die Druckrolle 15. Die Druckrolle 16 ist am unteren Ende des Arms 23 um eine horizontale Achse frei drehbar gelagert. Der Arm 23 hat in der beschriebenen Weise das Gehäuse 24, aus dem die Achse 25 ragt, die das Laufrad 16 trägt. Im Gehäuse 24 ist ein Druckmedium, vorzugsweise eine Druckfeder, untergebracht, um die Druckrolle 16 federnd zu lagern. Das Gehäuse 23 ist im Tragarm 20 in der beschriebenen Weise geklemmt. Der Tragarm 20 ist kürzer als der Tragarm 20 der Druckrolle 15, weil sich die Druckrolle 16 etwa in Höhe des Pendelhalters 12 befindet. Der Tragarm 20 sitzt auf der Tragstange 33, die in der beschriebenen Weise ausgebildet ist und im Druckrollenhalter 34 festgeklemmt werden kann. Bis auf die unterschiedliche Länge des Tragarmes 20 und ggf. einer längeren Tragstange mit einem längeren Schaftbereich, um einen größeren Verstellbereich in Breitenrichtung des Werkstückes zu ermöglichen, ist die komplette Verstelleinrichtung für die Druckrolle 16 gleich ausgebildet wie die Verstelleinrichtung für die Druckrolle 15, so dass auf die dortige Beschreibung verwiesen wird.

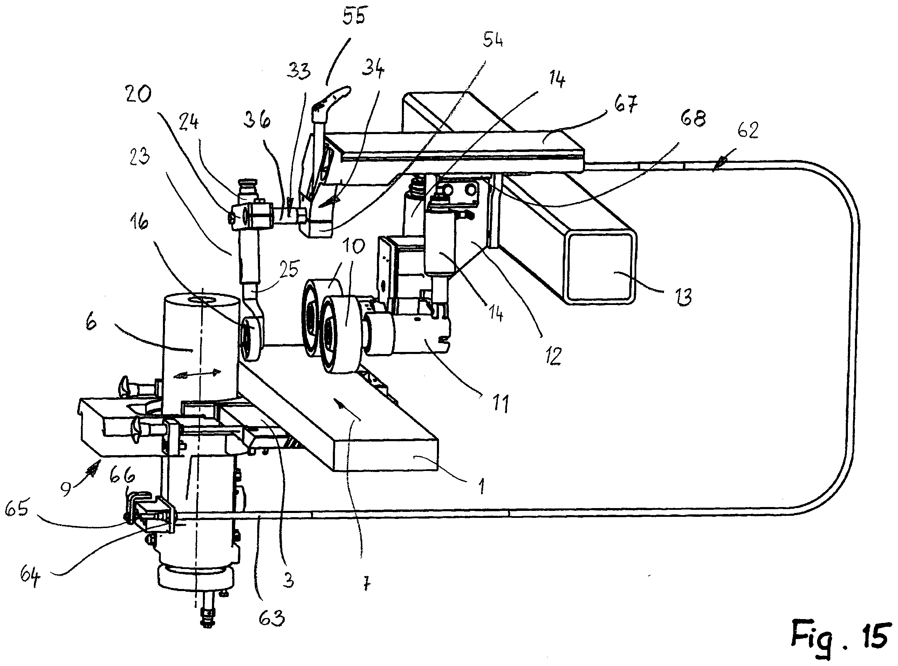

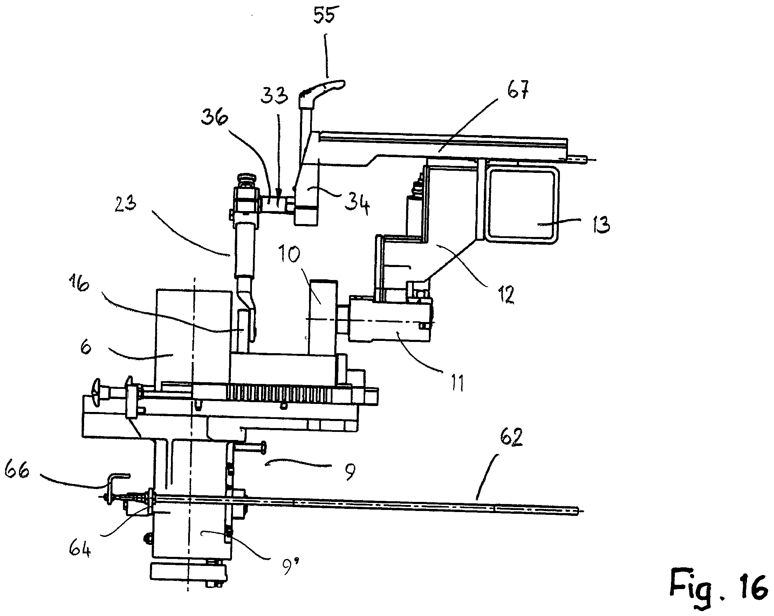

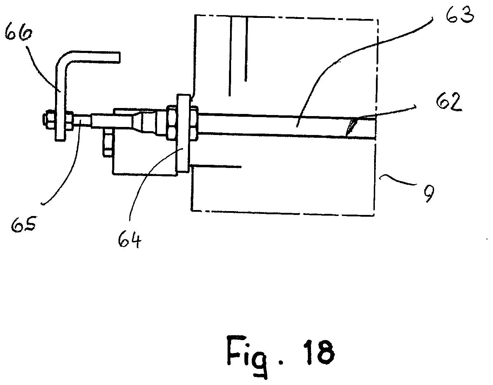

Die Fig. 15 bis 18 zeigen eine Ausführungsform der Verstelleinrichtung für die Druckrolle 16 für den Fall, dass die Druckrolle zusammen mit dem linken Werkzeug 6 quer zur Transportrichtung 7 des Werkstückes 1 verstellbar ist. Zur Verstellung dieses Werkzeuges 6 dient der Schieber 9, der senkrecht zur Transportrichtung 7 am Maschinentisch 3 verschiebbar gelagert ist. Dadurch kann die Position des linken Werkzeuges 6 an die Breite des Werkstückes 1 angepasst werden.

Damit die Druckrolle 16 in gleichem Maße bei dieser Verstellung des Werkzeuges 6 mitgenommen wird, ist sie über eine Fernbetätigung 62 mit dem Schieber 9 gekoppelt. Mit der Fernbetätigung 62 können Kräfte in beiden Richtungen übertragen werden. Eine Hülle 63 der Fernbetätigung 62 ist mit einem Ende an einem Halter 64 befestigt, der am Schieber 9 befestigt ist. Die Seele 65 der Fernbetätigung 62 besteht aus geschichteten Federstahlblechstreifen, die gegeneinander und gegen halbrunde Führungsstreifen gelagert sind. Solche Fernbetätigungen sind beispielsweise unter der Bezeichnung "FLEXBALL-Fernbetätigungen" bekannt. Die Seele 65 der Fernbetätigung ist mit einem Ende an einem Haltewinkel 66 befestigt, der am (nicht dargestellten) Maschinenständer ortsfest montiert ist.

Das andere Ende der Fernbetätigung 62 ist an einem Ausleger 67 des Druckrollenhalters 34 befestigt (Fig. 15). Der Ausleger 67 erstreckt sich senkrecht zum Transportbalken 13 und ist längs einer Führung 68 senkrecht zur Transportrichtung 7 des Werkstückes 1 verschiebbar. Die Führung 68 ist am oberen Ende des Pendelhalters 12 vorgesehen. An dem vom Transportbalken 13 abgewandten Ende des Auslegers 67 ist der Druckrollenhalter 34 vorgesehen, der den Klemmabschnitt 54 und die Klemmeinrichtung 55 aufweist, mit der die Tragstange 33 in der beschriebenen Weise im Druckrollenhalter 34 gehalten werden kann. Der Druckrollenhalter 34 und die Klemmeinrichtung 55 sind in der beschriebenen Weise ausgebildet. Der Tragarm 20 sitzt in der beschriebenen Weise auf der Tragstange 33 und trägt den Arm 23, an dessen unterem Ende die frei drehbare Druckrolle 16 gelagert ist.

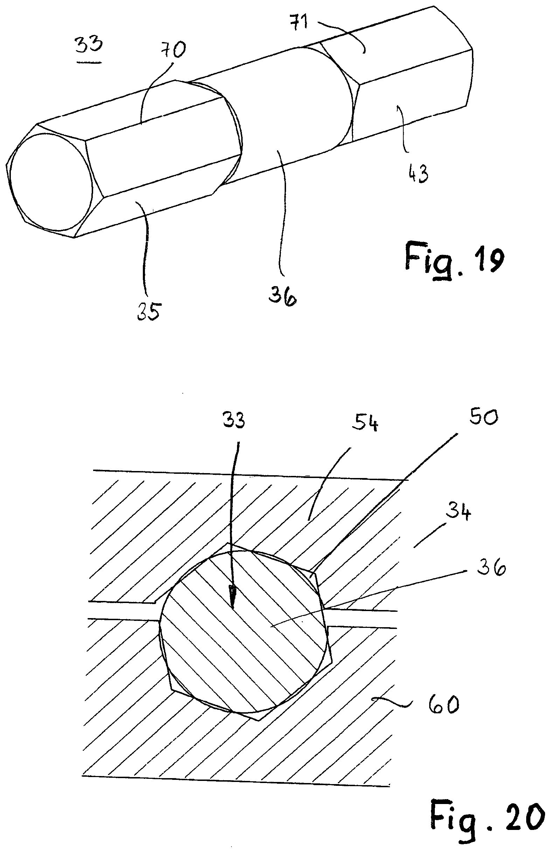

Die Tragstange 33 hat in diesem Falle einen zylindrischen Drehabschnitt 36 (Fig. 19), der den Durchmesser 41 aufweist. Zum Verstellen der Druckrolle 16 aus der Druckposition in die Ruheposition wird die Tragstange 33 in der beschriebenen Weise axial so verschoben, dass der zylindrische Drehabschnitt 36 im Druckrollenhalter 34 liegt. Da der Drehabschnitt 36 zylindrisch ausgebildet ist, erfolgt in jeder Winkellage eine zuverlässige Klemmung auf dem Drehabschnitt 36 derTragstange 33. Dadurch ist der Einsatz in der Druckstellung der Druckrolle 16 auch in einer axialen Position der Tragstange 33 möglich, in der sowohl der Drehabschnitt 36 als auch der Schaft 35 in der Öffnung 50 des Druckrollenhalters 34 zu liegen kommen. Für den Formschluss reicht es aus, wenn eine kurze Länge, zum Beispiel 5 mm, der Tragstange 33 bzw. ihres Schaftes 35 innerhalb der Öffnung 50 liegt. Da bei dieser Ausführungsform der Tragstange 33 auch auf dem zylindrischen Drehabschnitt 36 in der Winkellage des Sechskant geklemmt wird, ist die Tragstange 33 spielfrei über die komplette Klemm- bzw. Einspannlänge im Druckrollenhalter 34 geklemmt. Im Unterschied zur Tragstange 33 gemäß den Fig. 9 bis 11 wird die Tragstange 33 gemäß Fig. 19 beispielsweise aus Rundmaterial gefertigt, an dem lediglich die Sechskant-Flächen angefräst werden.

Aufgrund dieser Herstellungsweise ist es auch möglich, dass der Schaft 35 sowie der Abschnitt 43 relativ verdreht zueinander angeordnet sind, so dass die ebenen Flächen dieser beiden Teile der Tragstange 33 verdreht zueinander angeordnet sind. Dann lassen sich unterschiedliche Winkellagen zwischen der Druckposition und der Ruheposition erreichen, wenn beispielsweise der Schaft 35 für die Klemmung in der Druckposition und der Abschnitt 43 für die Klemmung in Ruheposition genutzt wird. Die beiden Abschnitte 35, 43 der Tragstange 33 haben jeweils gleichen sechseckigen Umriss. Im Ausführungsbeispiel ist der Winkelversatz zwischen den beiden Abschnitten 35, 43 so gewählt, dass die ebenen Flächen beider Abschnitte jeweils um 30° relativ zueinander winkelversetzt angeordnet sind. Dadurch liegen die achsparallelen Kanten 70 zwischen den ebenen Flächen des Schaftes 35, in Achsrichtung der Tragstange 33 gesehen, in halber Breite der ebenen Flächen 71 des Abschnittes 43 der Tragstange 33.

Der Schieber 9 hat einen nach unten ragenden Schieberteil 9', an dem der Halter 64 für die Fernbetätigung 62 befestigt ist. Der Schieber 9 wird in bekannter Weise senkrecht zur Transportrichtung 7 des Werkstückes 1 verstellt.

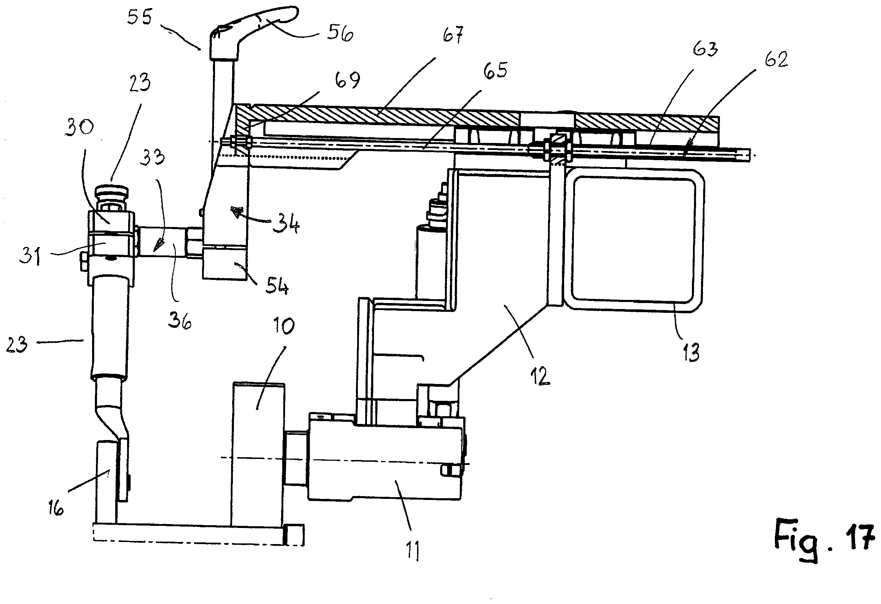

Wie aus Fig. 17 hervorgeht, hat der Ausleger 67 im Bereich des Druckrol-Ienhalters 34 einen abgewinkelten Rand 69, an dem das eine Ende der Seele 65 der Fernbetätigung 62 befestigt ist. Die Hülle 63 der Fernbetätigung 62 ist mit ihrem benachbarten Ende am Pendelhalter 12 befestigt.

Wird der Schieber 9 mit dem Werkzeug 6 quer zur Transportrichtung 7 des Werkstückes 1 verstellt, wird über die Fernbetätigung 62 der Druckrollenhalter 34 und damit auch die Laufrolle 16 entsprechend mitgenommen, so dass der Abstand zwischen dem Werkzeug 6 und der Druckrolle 16 unabhängig von der Position des Werkzeuges 6 gleich bleibt. Die flexible Fernbetätigung 62 ist so durch die Kehlmaschine geführt, dass sie den Transport der Werkstücke 1 durch die Kehlmaschine sowie die Verstellung von Maschinenteilen nicht behindert.

Die Druckrolle 16 kann aus der in den Fig. 1 und 2 dargestellten Druckposition in die Ruheposition verstellt werden, die in Fig. 3 dargestellt ist. Hierzu wird der Tragarm 20, wie anhand der Druckrolle 15 beschrieben, um die Drehachse 21 aufwärts so verschwenkt, dass sich die Druckrolle 16 in der Ruheposition im Bereich oberhalb des Transportbalkens 13 befindet. In dieser Ruheposition wird der Tragarm 20 dadurch gehalten, dass mittels der Klemmeinrichtung 55 die Tragstange 33 in der Aufnahme 50 des Druckrollenhalters 34 festgeklemmt wird. Damit der Tragarm 20 aufwärts verschwenkt werden kann, wird die Klemmung der Tragstange 33 in der Öffnung 50 des Druckrollenhalters 34 in der beschriebenen Weise gelöst. Dann kann die Tragstange 33 so weit aus der Öffnung 50 herausgeschoben werden, dass der Drehabschnitt 36 in der Öffnung 50 liegt. Über die gekrümmten Flächen 38, 52 des Drehabschnittes 36 der Tragstange 33 und der Öffnung 50 kann die Tragstange 33 um ihre Achse gedreht werden, wodurch der Tragarm 20 verschwenkt wird. In der hochgeschwenkten Lage wird mit der Klemmeinrichtung 55 der Klemmabschnitt 54 des Druckrollenhalters 34 wieder gegen den Drehabschnitt 36 der Tragstange 33 bzw. gegen den Schaft 35 oder Abschnitt 43 verspannt, wenn die Tragstange 33 mit dem Schaft 35 oder Abschnitt 43 wieder axial in den Klemmbereich des Druckrol-Ienhalters 34 verschoben worden ist.

Wenn die Kehlmaschine keine quer zur Transportrichtung 7 des Werkstückes 1 zusammen mit dem verstellbaren Werkzeug 6 verstellbare Druckrolle 16 aufweist, hat die Kehlmaschine die Koppelung des Druckrollenhalters 34 mit einem Schieber über eine Fernbetätigung nicht. Dann ist die Verstelleinheit 19 für die Druckrolle 16 gleich ausgebildet (bis auf die unterschiedliche Länge des Tragarms 20 und der Tragstange 33) wie die Verstelleinheit 18 für die Druckrolle 15. Die axiale Querverstellung der Druckrolle erfolgt dann rein über die axiale Position der Tragstange 33 im Druckrollenhalter 34. Dafür muss die Tragstange 33 eine entsprechende Länge des Schaftes 35 aufweisen. Auch muss die Verschiebemöglichkeit konstruktiv gegeben sein. Beispielsweise hat der Pendelhalter 12 in Verlängerung der Öffnung 50 eine Bohrung und entsprechenden freien Raum zum Verschieben der Tragstange 33 in den Pendelhalter 12. Gegebenenfalls hat auch der Transportbalken 13 eine entsprechende Bohrung, so dass eine entsprechend lange Tragstange 33 in den Transportbalken 12 hinein verschoben werden kann, wenn sich die linke Spindel und die Druckrolle in einer Arbeitsstellung zur Bearbeitung schmaler Teile befinden.

Die Druckrollen 15, 16 lassen sich zuverlässig zwischen der Druck- und der Ruheposition verstellen. Da die Tragstange 33 mehreckigen Umriss hat, ergibt sich ein zuverlässiger Formschluss zwischen der Tragstange 33 und dem Druckrollenhalter 34. Wird die Klemmung der Tragstange 33 gelockert, dann wird durch den mehreckigen Umriss des Schaftes 35 der Tragstange 33 gewährleistet, dass sich die Tragstange und damit der Tragarm 20 nicht verstellt. Soll ein Werkzeugwechsel vorgenommen werden, lassen sich die Druckrollen 15, 16 sehr einfach in der beschriebenen Weise wegschwenken. Dadurch ist ein Werkzeugwechsel innerhalb kurzer Zeit möglich. In der Ruheposition liegen die Druckrollen 15, 16 außerhalb des Bereichs der Werkzeuge, so dass die Druckrollen den Werkzeugwechsel nicht behindern. Werden die Druckrollen für eine Bearbeitungsaufgabe nicht gebraucht, oder können bei einer Bearbeitung nicht eingesetzt werden, weil sie z. B. stören, können sie in die Ruheposition verstellt werden und dort verbleiben. Die Verstellung der Druckrollen 15, 16 zwischen der Ruhe- und der Druckposition lässt sich einfach durch Verschwenken des Tragarms 20 durchführen. Aufwändige Verstelleinheiten bzw. aufwändig zu betätigende Verstelleinrichtungen sind nicht vorhanden.

Für beide Druckrollen 15, 16 kann jeweils eine Tragstange 33, wie sie anhand der Fig. 9 bis 11 oder Fig.19 beschrieben wurde, eingesetzt werden. So kann die Tragstange 33 für die Druckrollenverstellung 16 eine Ausbildung haben, wie sie anhand der Fig. 9 bis 11 beschrieben worden ist. Umgekehrt kann für die Verstellung der Druckrolle 15 auch eine Tragstange 33 entsprechend der Ausführungsform gemäß Fig. 19 herangezogen werden.

Anhand der Fig. 20 bis 23 wird die beschriebene Klemmwirkung im Bereich des Schaftes 35 sowie des Drehbereiches 36 beschrieben. Fig. 20 zeigt in vergrößerter Darstellung den Druckrollenhalter 34 mit dem Klemmabschnitt 54 und dem Teil 60. Die Tragstange 33 nimmt eine solche Lage ein, dass ihr Drehbereich 36 in der Klemmöffnung 50 des Druckrollenhalters 34 liegt. Der Drehbereich 36 hat eine Ausbildung entsprechend den Fig. 9 bis 11. Die Tragstange 33 nimmt eine solche Stellung (Winkellage) ein, dass sie in der Klemmöffnung 50 axial verschiebbar ist, d.h. die Sechskantquerschnitte des Schaftes 35 und der Klemmöffnung decken sich. Eine Klemmung der Tragstange 33 in der Klemmöffnung 50 ist in dieser Winkellage nicht möglich, weil kein Überlappungsbereich zwischen den gekrümmten Flächen von Drehbereich 36 und Öffnung 35 vorhanden ist, sondern nur die Kanten zwischen den Flächen aneinander liegen.

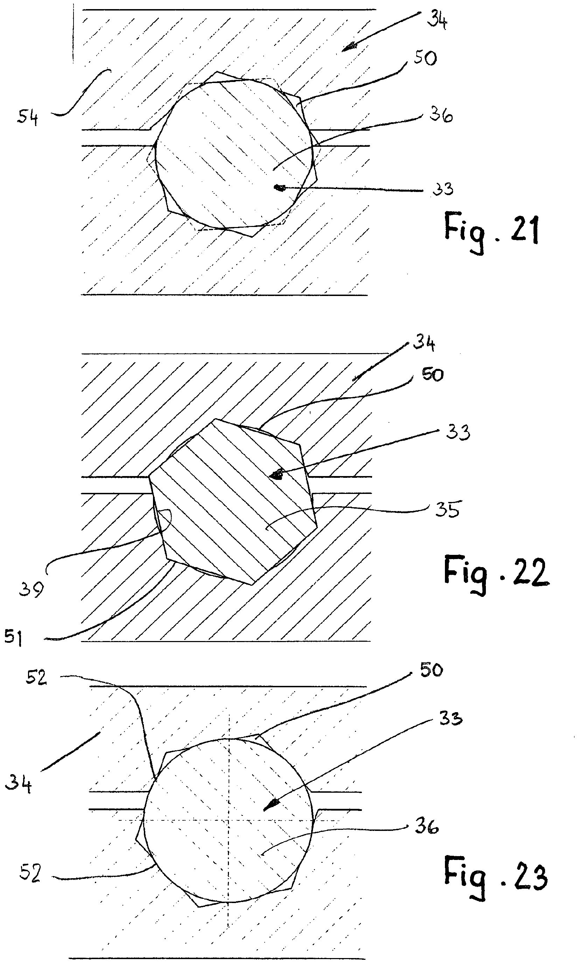

Fig. 21 zeigt die Situation, wenn der Drehbereich 36 der Tragstange 33 so verdreht ist, dass die gekrümmten Flächen des Drehbereiches 36 sowie der Wandung der Öffnung 50 des Druckrollenhalters 34 einander überlappen. In der Lage gemäß Fig. 21 kann mittels des Klemmabschnittes 54 die Tragstange 33 im Drehbereich 36 geklemmt werden.

In Fig. 22 befindet sich der Schaft 35 der Tragstange 33 in der Öffnung 50 des Druckrollenhalters 34. Die ebenen Flächen 39 des Schaftes 35 liegen an den ebenen Flächen 51 in der Wandung der Öffnung 50 an. In diesem Falle ist eine formschlüssige Klemmung der Tragstange 33 in der Klemmöffnung 50 gegeben.

Fig. 23 zeigt die Tragstange 33 in einer Ausbildung entsprechend Fig. 19. Der Drehbereich 36, der in der Öffnung 50 des Druckrollenhalters 34 liegt, hat die zylindrische Mantelfläche. Sie greift in die gekrümmten Flächen 52 in der Wandung der Öffnung 50 ein. Dadurch wird die Tragstange 33 in der Öffnung 50 des Druckrollenhalters 34 auf dem zylindrischen Drehbereich 36 in jeder Winkellage geklemmt, besonders auch in einer Winkellage, in der sich die Sechskantquerschnitte des Schaftes 35 und der Klemmöffnung 50 decken. Dann ist es, wie vorher beschrieben, möglich, die Druckrolle 16 auch mit einer axialen Position der Tragstange 33 einzusetzen und formschlüssig und zuverlässig zu klemmen, in der sowohl der Drehabschnitt 36 als auch der Schaft 35 in der Öffnung 50 des Druckrollenhalters 34 zu liegen kommen.

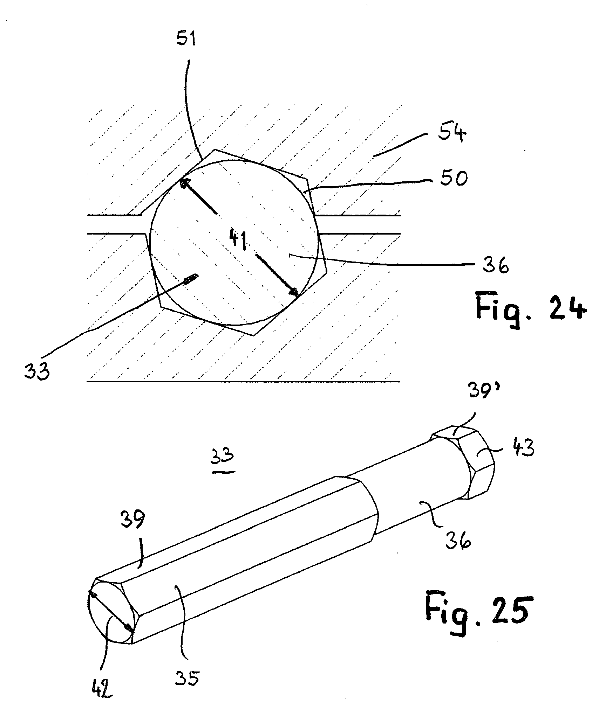

Fig. 25 zeigt eine Tragstange, die im Wesentlichen gleich ausgebildet ist wie die Tragstange gemäß den Fig. 9 bis 11. Der Unterschied besteht darin, dass der Drehbereich 36 zwischen dem sechseckigen Schaft 35 und dem sechseckigen Endabschnitt 43 zylindrisch ausgebildet ist. Der Schaft 35 und der Endabschnitt 43 der Tragstange 33 liegen so zueinander, dass ihre ebenen Flächen 39, 39' jeweils in gemeinsamen Ebenen liegen. Der zylindrische Drehabschnitt 36 hat einen Durchmesser 41, der gleich ist wie der Abstand 42 zwischen den diametral einander gegenüberliegenden ebenen Flächen 39, 39' des Schaftes 35 sowie des Endabschnittes 43 und damit dem Durchmesser des Inkreises des Schaftquerschnittes entspricht. Bei einer Tragstange nach dem Ausführungsbeispiel gemäß den Fig. 9 bis 11 wären das beispielhaft 27 mm. Bei einer solchen Ausbildung der Tragstange 33 kann die Öffnung 50 im Druckrollenhalter 54 einen sechseckigen Umriss haben. Die Wandung der Öffnung 50 besteht somit aus ebenen Flächen 51, die im Unterschied zu den zuvor beschriebenen Ausführungsbeispielen keine gekrümmten Flächen aufweisen. Befindet sich der Drehabschnitt 36 in der Öffnung 50, lässt sich die Tragstange 33 um ihre Achse drehen. Auch kann mit dem Klemmabschnitt 54 die Tragstange 33 im Bereich des Drehabschnittes 36 in der Öffnung 50 in jeder Winkellage geklemmt werden. Die zylindrische Mantelfläche und die Sechskantflächen haben dabei über die Tiefe der Klemmöffnung des Druckrollenhalters Linienberührung parallel zur Achse der Tragstange. Wird die Tragstange 36 so verschoben, dass ihr Schaft 35 in der Öffnung 50 liegt, dann kann auch der Schaft 35 zuverlässig in der Öffnung 50 geklemmt werden, wobei die ebenen Flächen 39, 51 des Schaftes 35 und der Wandung der Öffnung 50 flächig aneinander liegen.

Bei einer weiteren (nicht dargestellten) Ausführungsform kann der zweite Abschnitt 36 der Tragstange 33 auch so ausgebildet sein, dass die zylindrische Mantelfläche durch eine im Querschnitt mehreckige Gestaltung angenähert ist. So kann beispielsweise der zweite Abschnitt 36 aus einem Zwölfkant oder einem Vierundzwanzigkant bestehen. Die Kanten zwischen den ebenen Mehrkantflächen liegen dann auf dem Durchmesser der zylindrischen Mantelfläche. Befindet sich der zweite Abschnitt 36 in der Klemmöffnung 50 des Druckrollenhalters 34, dann liegen die Kanten des zweiten Abschnittes 36 der Tragstange 33 unter Linienberührung an der Innenseite 51 der Klemmöffnung 50 an. Die Tragstange 33 lässt sich auch bei einer solchen Gestaltung um ihre Achse in der Klemmöffnung 50 drehen.

## Patentansprüche

1. Verstelleinrichtung mit einer Druckrolle einer Bearbeitungsmaschine, insbesondere einer Kehlmaschine, für Werkstücke aus Holz, Kunststoff und dergleichen, mit einem Tragarm, der um eine Achse schwenkbar ist und eine Druckrolle trägt, die mittels des Tragarms aus einer Druckposition in eine Ruheposition verstellbar ist, der auf einer Tragstange sitzt, die in eine Klemmöffnung eines Druckrollenhalters eingreift, **dadurch gekennzeichnet, dass** die Tragstange (33) einen ersten Abschnitt (35), der einen unrunden Querschnitt aufweist und einen Formschlussabschnitt bildet, der formschlüssig mit der Klemmöffnung des Druckrollenhalters zusammenwirkt, und einen, zum ersten Abschnitt (35) axial versetzt angeordneten zweiten Abschnitt (36) aufweist, der ein Drehabschnitt ist, der an der Innenseite der Klemmöffnung (50) anliegt und eine Drehbewegung der Tragstange (33) um ihre Achse in der Klemmöffnung (50) des Druckrollenhalters (34) ermöglicht.

2. Verstelleinrichtung nach Anspruch 1,
**dadurch gekennzeichnet, dass** der zweite Abschnitt (36) der Tragstange (33) eine zylindrische Mantelfläche aufweist.

3. Verstelleinrichtung nach Anspruch 2,
**dadurch gekennzeichnet, dass** der Durchmesser (41) der zylindrischen Mantelfläche einem Innenkreisdurchmesser des eckigen Querschnitts des ersten Abschnittes (35) entspricht, und dass die zylindrische Mantelfläche des zweiten Abschnittes (36) unter Linienberührung an ebenen Innenseiten (51) der Klemmöffnung (50) des Druckrollenhalters (34) anliegt und die Drehung der Tragstange (33) um ihre Achse ermöglicht, wobei der eckige Querschnitt der Klemmöffnung (50) dem eckigen Querschnitt des ersten Abschnittes (35) der Tragstange (33) entspricht.

4. Verstelleinrichtung nach Anspruch 1 oder 2,
**dadurch gekennzeichnet, dass** die zylindrische Mantelfläche des zweiten Abschnittes (36) der Tragstange (33) an entsprechenden teilzylindrischen Innenseiten (52) der abwechselnd ebene Innenseiten (51) und teilzylindrische Innenseiten (52) aufweisenden Klemmöffnung (50) des Druckrollenhalters (34) anliegt und die Drehung der Tragstange (33) um ihre Achse ermöglicht.

5. Verstelleinrichtung nach Anspruch 1,
**dadurch gekennzeichnet, dass** der zweite Abschnitt (36) der Tragstange (33) abwechselnd ebene Außenseiten (37) und gekrümmte Außenseiten (38) aufweist, von denen die ebenen Außenseiten (37) so weit zurückgesetzt sind, dass die gekrümmten Außenseiten (38) funktionale Flächen bilden, die an entsprechend gekrümmten Innenseiten (52) der ebenfalls abwechselnd ebene Innenseiten (51) und gekrümmte Innenseiten (52) aufweisenden Klemmöffnung (50) des Druckrollenhalters (34) anliegen und die Drehung der Tragstange (33) um ihre Achse ermöglichen.

6. Verstelleinrichtung nach Anspruch 5,
**dadurch gekennzeichnet, dass** die gekrümmten Außenseiten (38) des zweiten Abschnittes (36) der Tragstange (33) und die gekrümmten Innenseiten (52) der Klemmöffnung (50) auf einem gedachten Zylindermantel liegen, dessen Achse die Schwenkachse (21) des Tragarms (20) bildet, wobei vorteilhaft die ebenen Außenseiten (37) des zweiten Abschnittes (36) stetige Fortsetzungen von ebenen Außenseiten (39) des ersten Abschnittes (35) der Tragstange (33) sind.

7. Verstelleinrichtung nach Anspruch 5 oder 6,
**dadurch gekennzeichnet, dass** der Durchmesser (42) des gedachten Zylindermantels größer ist als der Abstand (42) zwischen einander gegenüberliegenden ebenen Außenseiten (37, 51) des zweiten Abschnitten (36) der Tragstange (33) und der Klemmöffnung (50).

8. Verstelleinrichtung nach einem der Ansprüche 1 bis 7,
**dadurch gekennzeichnet, dass** der zweite Abschnitt (36) zwischen dem ersten Abschnitt (35) und einem vorteilhaft gleichen Querschnitt wie der erste Abschnitt (35) aufweisenden Endabschnitt (43) der Tragstange (33) liegt, und dass vorzugsweise der erste Abschnitt (35) und der Endabschnitt (43) der Tragstange (33) winkelversetzt zueinander liegen.

9. Verstelleinrichtung nach einem der Ansprüche 1 bis 8,
**dadurch gekennzeichnet, dass** die Tragstange (33) in der Klemmöffnung (50) derart verschiebbar ist, dass der erste Abschnitt (35) in der Druckposition der Druckrolle (15, 16) und in der verschwenkten Ruheposition der zweite Abschnitt (36) oder der erste Abschnitt (35) in der Klemmöffnung (50) klemmbar ist.

10. Verstelleinrichtung nach einem der Ansprüche 1 bis 8,
**dadurch gekennzeichnet, dass** die Tragstange (33) mit allen Abschnitten (35, 36, 43) in der Klemmöffnung (50) klemmbar ist.

11. Verstelleinrichtung nach einem der Ansprüche 1 bis 10,
**dadurch gekennzeichnet, dass** der Druckrollenhalter (34) mindestens einen Klemmabschnitt (54) aufweist, der die Klemmkraft auf die Tragstange (33) ausübt und über einen Biegebereich (53) mit dem übrigen Teil (60) des Druckrollenhalters (34) verbunden ist, dass vorzugsweise der Klemmabschnitt (54) durch einen den Druckrollenhalter (34) über einen Teil seiner Breite sich erstreckenden Querschlitz (45) vom übrigen Teil (60) des Druckrollenhalters (34) getrennt ist, und dass der Querschlitz (45) die Klemmöffnung (50) vorzugsweise durchsetzt.

12. Verstelleinrichtung nach einem der Ansprüche 1 bis 11,
**dadurch gekennzeichnet, dass** der Tragarm (20) auf der Tragstange (33) festgeklemmt ist.

13. Verstelleinrichtung nach einem der Ansprüche 1 bis 12,
**dadurch gekennzeichnet, dass** die Laufrolle (15, 16) auf einem Arm (23) gelagert ist, der im Tragarm (20) festklemmbar ist.

14. Verstelleinrichtung nach einem der Ansprüche 1 bis 13,
**dadurch gekennzeichnet, dass** der Druckrollenhalter (34) in Achsrichtung der Tragstange (33) verstellbar ist.

15. Bearbeitungsmaschine, insbesondere Kehlmaschine, mit einer Verstelleinrichtung nach einem der Ansprüche 1 bis 14.

16. Bearbeitungsmaschine nach Anspruch 15,
**dadurch gekennzeichnet, dass** die Tragstange (33) im Bereich oberhalb eines Maschinentisches (3) liegt und sich vorzugsweise quer zur Transportrichtung (7) der Werkstücke (1) durch die Bearbeitungsmaschine erstreckt.

17. Bearbeitungsmaschine nach Anspruch 15 oder 16,
**dadurch gekennzeichnet, dass** die Bearbeitungsmaschine wenigstens ein Werkzeug (6) aufweist, das mittels eines Schiebers (9) quer zur Transportrichtung (7) der Werkstücke (1) verstellbar ist.

18. Bearbeitungsmaschine, insbesondere nach Anspruch 17,
**dadurch gekennzeichnet, dass** der Schieber (9) mit einem Druckrollenhalter (34) so gekoppelt ist, dass der Druckrollenhalter (34) zusammen mit dem Schieber (9) quer zur Transportrichtung (7) der Werkstücke (1) verstellbar ist.

19. Bearbeitungsmaschine nach Anspruch 18,
**dadurch gekennzeichnet, dass** die Verstellbewegung des Druckrollenhalters (34) von der Verstellbewegung des Schiebers (9) abgeleitet ist.

20. Bearbeitungsmaschine nach Anspruch 18 oder 19,
**dadurch gekennzeichnet, dass** der Schieber (9) und der Druckrollenhalter (34) über wenigstens eine Fernbetätigung (62) miteinander verbunden sind.

## Claims

1. Adjusting device with a pressure roller of a processing machine, in particular a moulder, for workpieces made of wood, plastic and suchlike, with a carrier arm, which is pivotable about an axis and carries a pressure roller, which by means of the carrier arm is displaceable from a pressing position into a rest position, which sits on a carrier rod which engages in a clamping opening of a pressure roller carrier, **characterised in that** the carrier rod (33) comprises a first section (35) having an unround cross-section and forming a form fit section which positively interacts with the clamping opening of the pressure roller holder, and a second section (36) which is arranged axially offset with regard to the first section (35) and is a rotating section in contact with the inner side of the clamping opening (50) and allows a rotary movement of the carrier rod (33) about its axis in the clamping opening (50) of the pressure roller holder (34).

2. Adjusting device according to claim 1,
**characterised in that** the second section (36) of the carrier rod (33) has a cylindrical lateral surface.

3. Adjusting device according to claim 2,
**characterised in that** the diameter (41) of the cylindrical lateral surface corresponds to an inner diameter of the angular cross-section of the first section (35) and **in that** the cylindrical lateral surface of the second section (36) rests in linear contact on flat inner sides (51) of the clamping opening (50) of the pressure roller holder (34) and permits the rotation of the carrier rod (33) about its axis, wherein the angular cross-section of the clamping opening (50) corresponds to the angular cross-section of the first section (35) of the carrier rod (33).

4. Adjusting device according to claim 1 or 2,
**characterised in that** the cylindrical lateral surface of the second section (36) of the carrier rod (33) contacts corresponding part-cylindrical inner sides (52) of the clamping opening (50) of the pressure roller holder (34) having alternating flat inner sides (51) and part-cylindrical inner sides (52) and permits the rotation of the carrier rod (33) about its axis.

5. Adjusting device according to claim 1,
**characterised in that** the second section (36) of the carrier rod (33) alternately comprises flat outer sides (37) and curved outer sides (38), of which the flat outer sides (37) are set back so far that the curved outer sides (38) form functional surfaces which contact correspondingly curved inner sides (52) of the clamping opening (50) of the pressure roller holder (34) also alternately having flat inner sides (51) and curved inner sides (52) and allowing rotation of the carrier rod (33) about its axis.

6. Adjusting device according to claim 5,
**characterised in that** the curved outer sides (38) of the second section (36) of the carrier rod (33) and the curve inner sides (52) of the clamping opening (50) lie on an imaginary cylinder jacket, the axis of which forms the pivoting axis (21) of the carrier arm (20), wherein advantageously the flat outer sides (37) of the second section (36) are continuous projections of flat outer sides (39) of the first section (35) of the carrier rod (33).

7. Adjusting device according to claim 5 or 6,
**characterised in that** the diameter (42) of the imaginary cylinder jacket is larger than the distance (42) between opposite flat outer sides (37, 51) of the second section (36) of the carrier rod (33) and the clamping opening (50).

8. Adjusting device according to any one of claims 1 to 7, **characterised in that** the second section (36) lies between the first section (35) and an end section (43) of the carrier rod (33) advantageously having the same diameter as the first section and **in that** preferably the first section (35) and the end section (43) of the carrier rod (33) are angularly offset with regard to each other.

9. Adjusting device according to any one of claims 1 to 8, **characterised in that** the carrier rod (33) is displaceable in the clamping opening (50) in such a way that the first section (35) in the pressure position of the pressure roller (15, 16) and in the pivoted rest position the second section (36) or the first section (35) can be clamped in the clamping opening (50).

10. Adjusting device according to any one of claims 1 to 8, **characterised in that** the carrier rod (33) can be clamped with all sections (35, 36, 43) in the clamping opening (50).

11. Adjusting device according to any one of claims 1 to 10, **characterised in that** the pressure roller holder (34) has at least one clamping section (54) which exerts the clamping force on the carrier rod (33) and via a bending area (53) is connected to the remaining part (60) of the pressure roller holder (34), **in that** preferably the clamping section (54) is separated from the remaining part (60) of the pressure roller holder (34) by a transverse slit (45) extending over part of its width, and **in that** the transverse slit (45) preferably passes through the clamping opening (50).

12. Adjusting device according to any one of claims 1 to 11, **characterised in that** the carrier arm (20) is clamped firmly onto the carrier rod (33).

13. Adjusting device according to any one of claims 1 to 12, **characterised in that** the guide roller (15, 16) is borne on an arm (23) which can be firmly clamped in the carrier arm (20).

14. Adjusting device according to any one of claims 1 to 13, **characterised in that** the pressure roller holder (34) is adjustable in the axial direction of the carrier rod (33).

15. Processing machine, in particular moulder, with an adjusting device according to any one of claims 1 to 14.

16. Processing machine according to claim 15,
**characterised in that** the carrier rod (33) is located in an area above a machine table (3) and preferably extends perpendicularly to the transporting direction (7) of the workpieces (1) through the processing machine.

17. Processing machine according to claim 15 or 16,
**characterised in that** the processing machine comprises at least one tool (6) which is adjustable by means of a pusher (9) perpendicularly to the transport direction (7) of the workpieces (1).

18. Processing machine, in particular according to claim 17,
**characterised in that** the pusher (9) is connected to a pressure roller holder (34) in such a way that the pressure roller holder (34) together with the pusher (9) is adjustable perpendicularly to the transport direction (7) of the workpieces (1).

19. Processing machine according to claim 18,
**characterised in that** the adjusting movement of the pressure roller holder (34) is derived from the adjusting movement of the pusher (9).

20. Processing machine according to claim 18 or 19,
**characterised in that** the pusher (9) and the pressure roller holder (34) are connected to each other by means of a least one remote control (62).

## Revendications

1. Dispositif de réglage comportant un rouleau compresseur d'une machine usinage, en particulier d'une machine à fraiser, pour des pièces en bois, plastique ou similaires, comportant un bras porteur qui est pivotable autour d'un axe et supporte un rouleau compresseur qui peut être passé au moyen du bras porteur d'une position de serrage à une position de repos et qui est assis sur une barre porteuse qui s'engrène dans un orifice de serrage d'un support de rouleau compresseur, **caractérisé en ce que** la barre porteuse (33) présente une première section (35) qui est dotée d'une section transversale non ronde et constitue une section de correspondance géométrique qui coopère en correspondance géométrique avec l'orifice de serrage du support de rouleau compresseur et une seconde section (36) disposée décalée axialement de la première section (35) et qui est une section de rotation qui repose sur la face intérieure de l'orifice de serrage (50) et permet un mouvement de rotation de la barre porteuse (33) autour de son axe dans l'orifice de serrage (50) du support de rouleau compresseur (34).

2. Dispositif de réglage selon la revendication 1,
**caractérisé en ce que** la seconde section (36) de la barre porteuse (33) présente une surface d'enveloppe cylindrique.

3. Dispositif de réglage selon la revendication 2, **caractérisé en ce que** le diamètre (41) de la surface d'enveloppe cylindrique équivaut à un diamètre circulaire intérieur de la section transversale carrée de la première section (35) et que la surface d'enveloppe cylindrique de la seconde section (36) est en contact au niveau des faces intérieures planes (51) de l'orifice de serrage (50) du support de rouleau compresseur (34) et permet la rotation de la barre porteuse (33) autour de son axe, la section transversale carrée de l'orifice de serrage (50) équivalant à la section transversale carrée de la première section (35) de la barre porteuse (33).

4. Dispositif de réglage selon la revendication 1 ou 2,
**caractérisé en ce que** la surface d'enveloppe cylindrique de la seconde section (36) de la barre porteuse (33) repose au niveau de faces intérieures partiellement cylindriques correspondantes (52) de l'orifice de serrage (50) du support de rouleau compresseur (34) présentant des faces intérieures alternativement planes (51) et partiellement cylindriques (52) et permet la rotation de la barre porteuse (33) autour de son axe.

5. Dispositif de réglage selon la revendication 1,
**caractérisé en ce que** la seconde section (36) de la barre porteuse (33) présente alternativement des faces extérieures planes (37) et des faces extérieures courbées (38), parmi lesquelles les faces extérieures planes (37) sont décalées suffisamment pour que les faces extérieures courbées (38) constituent des surfaces fonctionnelles qui reposent au niveau de l'orifice de serrage (50) du support de rouleau compresseur (34) présentant également des faces intérieures courbées en conséquence (52) et des faces intérieures également alternativement planes (51) et des faces intérieures courbées (52) et permettent la rotation de la barre porteuse (33) autour de son axe.

6. Dispositif de réglage selon la revendication 5,
**caractérisé en ce que** les faces extérieures courbées (38) de la seconde section (36) de la barre porteuse (33) et les faces intérieures courbées (52) de l'orifice de serrage (50) reposent sur une enveloppe cylindrique imaginaire dont l'axe constitue l'axe de pivotement (21) du bras porteur (20), les faces extérieures planes (37) de la seconde section (36) étant avantageusement des prolongements constants de faces extérieures planes (39) de la première section (35) de la barre porteuse (33).

7. Dispositif de réglage selon la revendication 5 ou 6,
**caractérisé en ce que** le diamètre (42) de l'enveloppe cylindrique imaginaire est supérieur à la distance (42) entre les faces extérieures planes opposées les unes aux autres (37, 51) de la seconde section (36) de la barre porteuse (33) et de l'orifice de serrage (50).

8. Dispositif de réglage selon une des revendications 1 à 7,
**caractérisé en ce que** la seconde section (36) se situe entre la première section (35) et une section terminale (43) de la barre porteuse (33) avantageusement avec la même section transversale que la première section (35) et que la première section (35) et la section terminale (43) de la barre porteuse (33) sont de préférence décalées en angle l'une par rapport à l'autre.

9. Dispositif de réglage selon une des revendications 1 à 8,
**caractérisé en ce que** la barre support (33) est déplaçable dans l'orifice de serrage (50) de manière à ce que la première section (35) puisse être bloquée dans la position de compression du rouleau compresseur (15, 16) et la seconde section (36) ou la première section (35) dans l'orifice de serrage (50) dans la position de repos pivotée.

10. Dispositif de réglage selon une des revendications 1 à 8,
**caractérisé en ce que** la barre porteuse (33) peut être serrée avec toutes les sections (35, 36, 43) dans l'orifice de serrage (50).

11. Dispositif de réglage selon une des revendications 1 à 10,
**caractérisé en ce que** le support de rouleau compresseur (34) présente au moins une section de serrage (54) qui exerce la force de serrage sur la barre porteuse (33) et est connectée par une partie courbée (53) à la pièce restante (60) du support de rouleau compresseur (34), que la section de serrage (54) est de préférence séparée par le supports de rouleau compresseur (34) par une fente transversale (45) s'étendant sur une partie de sa largeur de la pièce restante (60) du support de rouleau compresseur (34) et que la fente transversale (45) préférence à travers l'orifice de serrage (50).

12. Dispositif de réglage selon une des revendications 1 à 11,
**caractérisé en ce que** le bras porteur (20) est bloqué sur la barre porteuse (33).

13. Dispositif de réglage selon une des revendications 1 à 12,
**caractérisé en ce que** le rouleau (15, 16) s'appuie sur un bras (23) qui peut être bloqué dans le bras porteur (20) .

14. Dispositif de réglage selon une des revendications 1 à 13,
**caractérisé en ce que** le support de rouleau compresseur (34) est réglable dans le sens de l'axe de la barre porteuse (33).

15. Machine d'usinage, en particulier machine à fraiser, comportant un dispositif de réglage selon une des revendications 1 à 14.

16. Machine d'usinage selon la revendication 15,
**caractérisée en ce que** la barre porteuse (33) se situe dans une zone située au-dessus d'une table de machine (3) et s'étend de préférence transversalement au sens de transport (7) des pièces (1) à travers la machine d'usinage.

17. Machine d'usinage selon la revendication 15 ou 16,
**caractérisée en ce que** la machine d'usinage présente au moins un outil (6) qui est réglable au moyen d'un curseur (9) transversalement au sens de transport (7) des pièces (1).

18. Machine d'usinage, en particulier selon la revendication 17,
**caractérisée en ce que** le curseur (9) est couplé à un support de rouleau compresseur (34) de manière à ce que le support de rouleau compresseur (34) soit réglable en même temps que le curseur (9) transversalement au sens de transport (7) des pièces (1).

19. Machine d'usinage selon la revendication 18,
**caractérisé en ce que** le mouvement de réglage du support de rouleau compresseur (34) découle du mouvement de réglage du curseur (9).

20. Machine d'usinage selon la revendication 18 ou 19,
**caractérisé en ce que** le curseur (9) et le support de rouleau compresseur (34) sont raccordés ensemble par au moins une télécommande (62).
